# EUROPEAN PATENT APPLICATION

(11) **EP 4 693 471 A1**
(43) Date of publication of application: **11.02.2026**
(21) Application number: 24826169.5
(22) Date of filing: 07.06.2024
(51) Int. Cl.: H01M 4/36, H01M 4/62, H01M 4/525, H01M 4/505, H01M 4/58, H01M 4/02

(54) **POSITIVE ELECTRODE ACTIVE MATERIAL COMPOSITE AND MANUFACTURING METHOD THEREOF**

(30) Priority: 19.06.2023 KR 20230078417; 19.06.2023 KR 20230078418; 19.06.2023 KR 20230078419; 19.06.2023 KR 20230078420
(71) Applicant: LG Chem, Ltd., Seoul 07336 (KR)
(72) Inventor: CHOE, Jun Ho, Daejeon 34122 (KR); YOON, Ki Youl, Daejeon 34122 (KR); JUN, Jae Moon, Daejeon 34122 (KR)
(74) Representative: Hoffmann Eitle
(86) International application number: PCT/KR2024/007764
(87) International publication number: WO 2024/262847

(57) **Abstract**

The present invention relates to a new positive electrode active material composite in which a conductive material is uniformly applied on a surface of a positive electrode active material. The positive electrode active material composite according to the present invention has excellent electrical characteristics due to low powder resistance, and is particularly suitable for using in manufacturing a dry electrode due to the conductive material uniformly dispersed on the surface of the positive electrode active material.

## Description

### Technical Field

### Cross-reference to Related Applications

This application claims the benefit of Korean Patent Application No. 10-2023-0078417, 10-2023-0078418, 10-2023-0078419 and 10-2023-0078420 filed on June 19, 2023, in the Korean Intellectual Property Office, the disclosure of which is incorporated herein in its entirety by reference.

### Technical Field

The present invention relates to a positive electrode active material composite including a conductive material and a positive electrode active material and a method for preparing the same.

### BACKGROUND ART

Electrical energy has an advantage that since conversion, transmission, and storage thereof are easy, there are few limitations on time and location in using the same, and thus is being used in various fields of the modern society. In particular, recently, products, such as a portable apparatus, or an electric vehicle, used by storing the electrical energy are widely being used, and thus research on a secondary battery capable of storing the electrical energy is also actively being conducted.

Various types of secondary batteries in which the electrical energy may be recharged again after being fully discharged are being developed, and a lithium secondary battery which is the best in terms of an energy density is being used and researched at a very high frequency.

The lithium secondary battery is generally composed of four components such as a positive electrode, a negative electrode, an electrolyte, and a separator, and most of the lithium secondary batteries are manufactured in a method in which an electrode assembly is manufactured by assembling the positive electrode and the negative electrode separately manufactured, and the separator together, and then the electrolyte is injected to the assembly. Meanwhile, the most widely used method in manufacturing the positive electrode and the negative electrode is a wet process. The wet process is a method in which a slurry is prepared by mixing an active material, a conductive material, a binder, and an organic solvent, and then is applied on a current collector. The wet process has an advantage of being capable of being somewhat uniformly applied, but has limitations that a defect may occur in the electrode during removal of the solvent, and it is difficult to increase a thickness of a single electrode to more than a certain value due to flowability of the slurry itself. In addition, since the solvents generally having high boiling points are used as the organic solvents, much energy may be consumed during removal of the solvent, and environmental pollution may be also caused by using the solvent.

Accordingly, recently, in order to solve such problems of the wet process, a dry process is being researched. The dry process is a method for manufacturing an electrode by dry mixing the active material, the conductive material, and the binder without using the organic solvent, and microfiberizing the binder. However, the typical dry process also has a difficulty in dispersion of the conductive material itself.

Accordingly, research on a new method, for manufacturing an electrode, in which the conductive material may be uniformly dispersed, and the problems of the wet process may be also solved is needed.

### [Prior Art literature]

(Patent literature 1) KR 10-2006-0025230 A

### DISCLOSURE OF THE INVENTION

### TECHNICAL PROBLEM

An aspect of the present invention provides a new positive electrode active material composite capable of being used in a dry process of manufacturing a positive electrode, and a method for preparing the same, and the positive electrode active material composite according to the present invention has a form in which a conductive material is uniformly applied on a surface of a positive electrode active material, thereby capable of improving dispersibility of the conductive material in an electrode state.

In addition, the positive electrode active material composite may be prepared in an electrode form without using any solvent, and thus does not have a limitation occurring in the typical wet process of manufacturing a positive electrode.

### TECHNICAL SOLUTION

In order to solve the above-described problem, an aspect of the present invention provides a positive electrode active material composite and a method for preparing the same.
(1) The present invention provides a positive electrode active material composite including a positive electrode active material, and a coating layer formed on a surface of the positive electrode active material, wherein the coating layer includes a conductive material, and a residual solvent content is 0.18 to 1.0 wt%.
(2) In (1) above, the residual solvent content is 0.2 to 0.5 wt%.
(3) In (1) or (2) above, the positive electrode active material is at least one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-y}Co_{y}O₂(0<y<1), LiCo_{1-y}Mn_{y}O₂(0<y<1), LiNi_{1-y}Mn_{y}O₂(0≤y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2), LiCoPO₄ and LiFePO₄.
(4) In any one among (1) to (3) above, the conductive material is at least one selected from the group consisting of a single-walled carbon nanotube, a multi-walled carbon nanotube, carbon black, and Ketjen black.
(5) In any one among (1) to (4) above, the single-walled carbon nanotube has an average diameter of 0.5 to 2 nm.
(6) In any one among (1) to (5) above, the multi-walled carbon nanotube has an average diameter of 100 nm or less.
(7) In any one among (1) to (6) above, the carbon black has a D50 of 1 to 50 µm.
(8) In any one among (1) to (7) above, the Ketjen black has a pore volume of 200 to 600 cm³/100g.
(9) In any one among (1) to (8) above, the conductive material has a content of 0.01 to 10 wt% with respect to the total weight of the positive electrode active material composite.
(10) In any one among (1) to (9) above, the residual solvent is at least one selected from the group consisting of an amide-based polar organic solvent, an alcohol-based solvent, a glycol-based solvent, a glycol ether-based solvent, a ketone-based solvent, and an ester-based solvent, and the residual solvent has a boiling point of 120°C or less.
(11) The present invention provides a method for preparing a positive electrode active material composite including a step (S1) of preparing a pre-dispersion liquid by mixing a conductive material, a dispersant, and a solvent, a step (S2) of preparing a positive electrode active material mixture by mixing the pre-dispersion liquid and a positive electrode active material, and a step (S3) of preparing the positive electrode active material composite by drying the positive electrode active material mixture, wherein the solvent is at least one selected from the group consisting of an amide-based polar organic solvent, an alcohol-based solvent, a glycol-based solvent, a glycol ether-based solvent, a ketone-based solvent, and an ester-based solvent, and the solvent has a boiling point of 120°C or less.
(12) In (11) above, the step S3 is performed at a temperature condition of 60 to 200°C.
(13) In (11) or (12) above, the step S3 is performed for 0.5 to 8 hours.
(14) in any one among (11) to (13) above, the pre-dispersion liquid prepared in the step S1 has an initial viscosity of 40000 cP or less.

### ADVANTAGEOUS EFFECTS

A positive electrode active material composite according to the present invention has technological advantages that electrical characteristics thereof are excellent due to low powder resistance, and an electrode form may be manufactured without using any solvent not to cause problems of the typical wet process.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Positive Electrode Active Material Composite

The present invention provides a positive electrode active material composite which includes a positive electrode active material and a coating layer formed on a surface of the positive electrode active material, in which the coating layer includes a conductive material, and in which a residual solvent content is 0.18 to 1.0 wt%.

The existing dry process of manufacturing an electrode has a problem in which since an active material, a conductive material, and a binder are mixed in one step, the conductive material is not sufficiently dispersed in the mixture, but the present invention solves the problem by applying the conductive material on the surface of the active material in advance to secure dispersibility of the conductive material.

Specifically, the positive electrode active material composite according to the present invention may be prepared by mixing the positive electrode active material and the conductive material with a specific solvent and drying under a specific condition, and thus the residual solvent content in the positive electrode active material composite may be 0.18 to 1.0 wt%. More specifically, the residual solvent content in the positive electrode active material composite may be 0.18 wt% or more, 0.19 wt% or more, 0.2 wt% or more, 0.21 wt% or more, 0.22 wt% or more, 0.23 wt% or more, 0.24 wt% or more, 0.25 wt% or more, 0.26 wt% or more, 0.27 wt% or more, or 0.28 wt% or more, and may be 1.0 wt% or less, 0.95 wt% or less, 0.9 wt% or less, 0.85 wt% or less, 0.8 wt% or less, 0.75 wt% or less, 0.7 wt% or less, 0.65 wt% or less, 0.6 wt% or less, 0.55 wt% or less, 0.5 wt% or less, or 0.45 wt% or less. The positive electrode active material composite according to the present invention has the residual solvent content in the range described above to be different from a positive electrode active material composite which is manufactured by simply dry mixing the conductive material and the positive electrode active material, and in which the conductive material is partially applied on the surface of the positive electrode active material, and the residual solvent content may be lowly maintained within the range described above by optimizing the solvent and the drying condition in a preparing process. When the residual solvent content is too high, the residual solvent in the positive electrode active material composite may act as an impurity to cause an unwanted problem during a process of manufacturing an electrode, and an unnecessary additional process may be required during the dry process of manufacturing an electrode in order to remove the impurity. Meanwhile, when the residual solvent content is too low, a drying condition in the process of preparing the positive electrode active material composite may be very severe to cause low durability of the positive electrode active material composite by generating collapse, loss, or the like of the positive electrode active material during drying, thereby resulting in high resistance or low conductivity of the positive electrode active material composite.

Meanwhile, the residual solvent content may be obtained by measuring and calculating the solvent content remaining after taking a portion of the positive electrode active material composite and heating for 15 minutes at 200°C. The residual solvent content may be measured and calculated by using a moisture content measurement equipment. For example, a heating type moisture meter may be used. More specifically, a heating type moisture meter such as AMD's MX-50 product may be used. Meanwhile, the heating type of the moisture meter may use a straight halogen lamp.

The positive electrode active material composite according to the present invention may be used in manufacturing a dry electrode. Since the positive electrode active material composite according to the present invention has a form in which the conductive material is already dispersed on the surface of the active material, the dry electrode may be manufactured by mixing and microfiberizing the positive electrode active material composite and the binder without using a separate solvent for dispersing the conductive material. A form of the dry electrode is not specially limited, and a typical method for manufacturing a dry electrode may be applied to the positive electrode active material composite according to the present invention.

Hereinafter, each component included in the positive electrode active material composite according to the present invention will be more specifically described.

### Positive Electrode Active Material

The positive electrode active material included in the positive electrode active material composite according to the present invention may be used without special limitation as long as being capable of being used as the positive electrode active material of the lithium secondary battery. More specifically, the positive electrode active material may be at least one selected from the group consisting of lithium-manganese-based oxide, lithium-cobalt-based oxide, lithium-nickel-based oxide, lithium-nickel-manganese-based oxide, lithium-nickel-cobalt-based oxide, lithium-manganese-cobalt-based oxide, lithium-nickel-manganese-cobalt-based oxide, lithium-nickel-cobalt-transition metal oxide, lithium cobalt phosphate, and lithium iron phosphate, and more specifically, any one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-y}Co_{y}O₂(0<y<1), LiCo_{1-y}Mn_{y}O₂(0<y<1), LiNi_{1-y}Mn_{y}O₂(0≤y<1), Li (NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2), LiCoPO₄ and LiFePO₄, or a mixture of at least two thereof may be used.

### Conductive Material

The conductive material included in the positive electrode active material composite according to the present invention may be at least one selected from the group consisting of a single-walled carbon nanotube, a multi-walled carbon nanotube, carbon black, and Ketjen black.

Since characteristics of the conductive material are partially different depending on a type thereof, an appropriate conductive material among what are listed above may be selected and used depending on a targeted effect.

First, the single-walled carbon nanotube has an advantage that excellent electrical conductivity may be secured with a small amount thereof. Since the conductive material, such as carbon black, typically and widely used should be used in a large amount so as to exhibit a performance of at least a certain level, a content of the active material relatively decreases, but the carbon nanotube may exhibit high performance even in the same content as the carbon black to be recently widely used as the conductive material. In particular, the single-walled carbon nanotube has higher electrical conductivity than the multi-walled carbon nanotube, and thus may secure sufficient electrical conductivity even in a small amount to be advantageous in securing an energy density.

The single-walled carbon nanotube used in the present invention may have an average diameter of 0.5 to 2 nm, and preferably, 0.5 to 1.5 nm. In addition, the single-walled carbon nanotube used in the present invention may have a BET specific surface area of 800 to 1600 m²/g, and preferably, 1000 to 1500 m²/g. In addition, the single-walled carbon nanotube used in the present invention may have a length of at least 1 µm, and preferably, at least 3 µm. When physical characteristics of the single-walled carbon nanotube satisfy the above conditions, the single-walled carbon nanotube may have an excellent function as the conductive material.

The average diameter of the single-walled carbon nanotube may be measured after inspecting the single-walled carbon nanotube with a transmission electron microscope (TEM). In addition, the BET specific surface area of the single-walled carbon nanotube may be calculated from a gas adsorption amount by using a BET measurement equipment. In addition, a length of the single-walled carbon nanotube may be measured by using an atomic force microscope (AFM). In addition, a D50 of the single-walled carbon nanotube may be measured by using a laser particle size analyzer.

In addition, an I_{G}/I_{D} value of the single-walled carbon nanotube by Raman analysis may be at least 30, and preferably, at least 50. The I_{G}/I_{D} value means crystallinity of the carbon nanotube, and when the I_{G}/I_{D} value is high, the crystallinity of the carbon nanotube is excellent, and thus excellent electrical conductivity may be exhibited even in a small content. The I_{G}/I_{D} value may be calculated as a ratio of a G band peak intensity to a D band peak intensity of a Raman spectrum obtained for the single-walled carbon nanotube. The G band peak means a peak shown in a wavelength range of about 1550 to 1600 cm⁻¹ in Raman spectrum analysis, and the D band peak means a peak shown in a wavelength range of about 1300 to 1400 cm⁻¹ in the Raman spectrum analysis.

Meanwhile, the multi-walled carbon nanotube may secure high electrical conductivity caused by a one-dimensional structure, and thus is advantageous in the energy density.

The multi-walled carbon nanotube used in the present invention may have an average diameter of 100 nm or less, and preferably, 5 to 20 nm. In addition, the multi-walled carbon nanotube used in the present invention may have a BET specific surface area of 300 m²/g or less, and preferably, 150 to 250 m²/g. When physical characteristics of the multi-walled carbon nanotube satisfy the above condition, the multi-walled carbon nanotube may have an excellent function as the conductive material.

The average diameter of the multi-walled carbon nanotube may be measured after inspecting the multi-walled carbon nanotube with a transmission electron microscope (TEM). In addition, the BET specific surface area of the multi-walled carbon nanotube may be calculated from a gas adsorption amount by using a BET measurement equipment.

Meanwhile, the carbon black is a component widely used as the conductive material due to good conductivity.

In addition, the carbon black used in the present invention may have a BET specific surface area of 5 to 1000 m²/g, and preferably, 20 to 300 m²/g. In addition, the carbon black used in the present invention may have a D50 of 1 to 50 µm, and preferably, 1 to 20 µm. In addition, the carbon black used in the present invention may have a primary particle size of 500 nm or less, and preferably, 100 nm or less. When physical characteristics of the carbon black satisfy the above condition, the carbon black may have an excellent function as the conductive material.

In addition, the BET specific surface area of the carbon black may be calculated from a gas adsorption amount by using a BET measurement equipment. In addition, the D50 of the carbon black may be measured in a dry method by using a laser particle size analyzer (Mastersizer 3000, Malvern Inc.).

Meanwhile, the Ketjen black is a type of the carbon black, but is known as a highly conductive material capable of achieving a high performance even in the same content. The carbon black should be used in a large amount so as to achieve a performance of at least a certain level, but the Ketjen black may exhibit a similar performance even in a relatively small amount.

The Ketjen black used in the present invention may have a BET specific surface area of 500 to 2000 m²/g, and preferably, 600 to 1600 m²/g. In addition, the Ketjen black used in the present invention may have a porosity of 200 to 600 cm³/100g, and preferably, 300 to 500 cm³/100g. In addition, the Ketjen black used in the present invention may have a D50 of 5 to 30 mm, and preferably, 8 to 20 mm. When physical characteristics of the Ketjen black satisfy the above condition, the Ketjen black may have an excellent function as the conductive material.

The BET specific surface area of the Ketjen black may be calculated from a gas adsorption amount by using a BET measurement equipment. In addition, the porosity of the Ketjen black may be measured by using an oil absorption meter on the basis of ASTM D2414-21. In addition, the D50 of the Ketjen black is D50 which may be measured in a dry method by using a laser particle size analyzer (Mastersizer 3000, Malvern Inc.).

A content of the conductive material with respect to the total weight of the positive electrode active material composite may be 0.01 to 10 wt%. More specifically, the content of the conductive material with respect to the total weight of the positive electrode active material composite may be partially different depending on the type of the conductive material, and when the conductive material is carbon nanotube-based, the content may be 0.01 wt% or more, 0.05 wt% or more or 0.1 wt% or more and 10 wt% or less, 5 wt% or less, or 1 wt% or less or 0.5 wt% or less. Meanwhile, when the conductive material is carbon black-based, the content may be 0.01 wt% or more, 0.1 wt% or more or 0.5 wt% or more and 10 wt% or less, 5 wt% or less, 3 wt% or less or 1.5 wt% or less. When the content of the conductive material is less than the above, the positive electrode active material composite may not have sufficient electrical conductivity, and when the content of the conductive material is more than the above, processability of the positive electrode active material composite may be deteriorated.

### Residual Solvent

As described above, the positive electrode active material composite according to the present invention is prepared by mixing and drying the positive electrode active material and the conductive material in the presence of the solvent so that the solvent may partially remain in the positive electrode active material composite.

More specifically, the residual solvent may have a boiling point of 120°C or less, and more specifically, 100°C or less, and particularly preferably, 60 to 100°C. Specific examples of the residual solvent may be an amide-based polar organic solvent, an alcohol-based solvent, a glycol-based solvent, a glycol ether-based solvent, a ketone-based solvent, or an ester-based solvent that satisfy the boiling point condition, and particularly preferably, alcohol having a carbon number of 4 or less. More specifically, the residual solvent may be at least one selected from the group consisting of isopropyl alcohol, ethyl alcohol, 1-propyl alcohol, and 1-butyl alcohol. When the solvent listed above is used in a process of preparing the positive electrode active material composite, almost all solvents may be removed under a relatively mild drying condition, and the positive electrode active material may not be damaged in a process of removing the solvent.

### Electrical Characteristics

The positive electrode active material composite provided by the present invention may be easily used in manufacturing a dry electrode, and in particular, the dry electrode manufactured by using the positive electrode active material composite according to the present invention has features of low sheet resistance and excellent conductivity.

A measured sheet resistance value of the dry electrode obtained by mixing the positive electrode active material composite provided by the present invention and a microfiberizable binder may be 42.5 Ω/sq or less, and preferably, 42.5 Ω/sq or less, 42.0 Ω/sq or less, 41.5 Q/sq or less, 41 Ω/sq or less, 40.5 Ω/sq or less, 40 Ω/sq or less, 39.5 Ω/sq or less, or 39 Ω/sq or less and 20 Ω/sq or more, 21 Ω/sq or more, 22 Ω/sq or more, 23 Ω/sq or more, 24 Q/sq or more, 25 Ω/sq or more, 26 Ω/sq or more or 26.5 Ω/sq or more.

In addition, a measured conductivity value of the dry electrode may be 0.085 S/cm or more, and preferably, 0.085 S/cm or more, 0.09 S/cm or more, 0.095 S/cm or more or 0.1 S/cm or more, and 0.2 S/cm or less, 0.19 S/cm or less, 0.18 S/cm or less, 0.17 S/cm or less, 0.16 S/cm or less, 0.15 S/cm or less, 0.14 S/cm or less or 0.135 S/cm or less.

Meanwhile, in the dry electrode, a weight ratio of the positive electrode active material composite to the microfiberizable binder may be 95:5 to 99.9:0.1, and preferably, 97:3 to 99.5:0.5.

The sheet resistance and the conductivity may be measured by using a resistance measurement equipment, and for example, may be measured by using a resistance measurement equipment such as HPRM-FA2 (Hantech Co., Ltd).

### Method for Preparing Positive Electrode Active Material Composite

The present invention provides a method for preparing the positive electrode active material composite described above. More specifically, the present invention provides the method for preparing a positive electrode active material composite including a step (S1) of preparing a pre-dispersion liquid by mixing a conductive material, a dispersant, and a solvent, a step (S2) of preparing a positive electrode active material mixture by mixing the pre-dispersion liquid and a positive electrode active material, and a step (S3) of preparing the positive electrode active material composite by drying the positive electrode active material mixture, and having features that the solvent is at least one selected from the group consisting of an amide-based polar organic solvent, an alcohol-based solvent, a glycol-based solvent, a glycol ether-based solvent, a ketone-based solvent, and an ester-based solvent, and the solvent has a boiling point of 120°C or less.

### Step S1

In the step S1, the pre-dispersion liquid for applying the conductive material on the surface of the positive electrode active material is preferentially prepared. When the conductive material is mixed with the positive electrode active material in a pre-dispersed state, the conductive material may be uniformly applied on the surface of the positive electrode active material. Meanwhile, the dispersant used in the present step may be used without special limitation as long as being known as being capable of being used in dispersing the conductive material, and for example, at least one selected from the group consisting of polyvinylpyrrolidone, polyacrylic acid hydrazide, poly-N-vinyl-5-methoxazolidone, N-alkyl polyimine, N-acetyl polyimine, polyacrylamide, poly-L-lysine hydrobromide, benzyl -dodecyl-dimethylammonium chloride and polyethyleneimine may be used. In addition, a weight ratio of the conductive material to the dispersant in the pre-dispersion liquid may be 100:20 to 100:500, and preferably, 100:30 to 100:200. When the content of the dispersant is within the range described above, the conductive material may be appropriately dispersed.

Moreover, the solvent is the same as the residual solvent described above, and the solvent used in the present step may partially remain to be included as the residual solvent in the positive electrode active material composite. Accordingly, the solvent may be, like the residual solvent described above, at least one selected from the group consisting of an amide-based polar organic solvent, an alcohol-based solvent, a glycol-based solvent, a glycol ether-based solvent, a ketone-based solvent, and an ester-based solvent, and may have a boiling point of 120°C or less.

In the present step, the content of the conductive material in the pre-dispersion liquid may be 0.05 to 10 wt%. More specifically, the content of the conductive material in the pre-dispersion liquid may be partially different depending on a type of the conductive material. When the conductive material is a single-walled carbon nanotube, the content of the conductive material in the pre-dispersion liquid may be 0.05 to 5 wt%, and preferably, 0.1 to 1 wt%. Meanwhile, when the conductive material is a multi-walled carbon nanotube, the content of the multi-walled conductive material in the pre-dispersion liquid may be 0.05 to 10 wt%, and preferably, 1 to 5 wt%. Meanwhile, when the conductive material is carbon black-based, the content of the conductive material in the pre-dispersion liquid may be 0.1 to 10 wt%, and preferably, 0.5 to 5 wt%. When the content of the conductive material in the pre-dispersion liquid is too small, an amount of the conductive material applied on the positive electrode active material may be too small, and when the content of the conductive material in the pre-dispersion liquid is too large, the conductive material may not be easily pre-dispersed.

Meanwhile, when the conductive material is the single-walled carbon nanotube, the single-walled carbon nanotube in the pre-dispersion liquid prepared in the present step may have a D50 of 30 µm or less, and preferably, 5 to 20 µm.

Meanwhile, when the conductive material is the multi-walled carbon nanotube, the multi-walled carbon nanotube in the pre-dispersion liquid prepared in the present step may have a D50 of 20 µm or less, and preferably, 3 to 15 µm.

Meanwhile, when the conductive material is carbon black, the carbon black in the pre-dispersion liquid prepared in the present step may have a D50 of 20 µm or less, and preferably, 3 to 15 µm. In addition, an initial viscosity of the pre-dispersion liquid may be 40000 cP or less, and preferably, 1000 to 20000 cP. When the initial viscosity of the pre-dispersion liquid is too high, the pre-dispersion liquid and the positive electrode active material may not be smoothly mixed due to low processability. Meanwhile, the initial viscosity may be a value obtained after stabilization for 5 minutes at 2.5 /s on a Tokki viscometer.

The initial viscosity of the pre-dispersion liquid may be 40000 cP or less, and preferably, 1000 cP or more, 3000 cP or more or 5000 cP or more, and 40000 cP or less, 30000 cP or less, 20000 cP or less or 15000 cP or less. When the initial viscosity of the pre-dispersion liquid is too high, the pre-dispersion liquid and the positive electrode active material may not be smoothly mixed due to low processability. Meanwhile, the initial viscosity may be a value obtained after stabilization for 5 minutes at 2.5 /s on a Tokki viscometer.

### Step S2

Thereafter, the step of mixing the positive electrode active material and the pre-dispersion liquid prepared above may be performed. An amount of the positive electrode active material mixed in the present step may be 5 to 500 parts by weight with respect to 100 parts by weight of the pre-dispersion liquid, and preferably, 20 to 100 parts by weight. A content ratio of the positive electrode active material and the conductive material may be appropriate in the range described above.

### Step S3

The positive electrode active material composite in which the conductive material is applied on the surface of the positive electrode active material may be obtained by mixing the pre-dispersion liquid and the positive electrode active material, and then removing the solvent by drying.

In the present step, the drying may be performed at a relatively low temperature in consideration of the characteristics of the solvent described above, and more specifically, at a temperature condition of 60°C to 200°C, and particularly preferably, at a temperature condition of 80°C to 150°C. The solvent may be removed within the temperature condition described above without degradation of the positive electrode active material, and in particular, the residual solvent content may be controlled within the range described above. Furthermore, the drying in the present step may be performed for 0.5 hours to 8 hours, and preferably, for 0.5 hours to 2 hours. When the drying is performed for a too long time, an amount of energy consumed in a preparation process may be too much, and when the drying is performed for a too short time, the solvent may not be sufficiently removed.

Hereinafter, Examples and Comparative Examples will be described in more detail so as to specifically describe the present invention, but the present invention is not limited by Examples and Comparative Examples. Examples according to the present invention may be modified into various other forms, and the scope of the present invention should not be construed as being limited to Examples described in detail below. Examples of the present invention are provided in order to more completely describe the present invention to those with average knowledge in the art.

### Material

Lithium-nickel-manganese-cobalt-based oxide represented by Li(Ni_{0.8}Co_{0.1}Mn_{0.1})O₂ was prepared as a positive electrode active material, and 4 types of conductive materials were prepared as conductive materials. In addition, polyvinylpyrrolidone was prepared as a dispersant, and isopropyl alcohol and N-methyl-2-pyrrolidone (NMP) were prepared as solvents.
1) Single-walled carbon nanotube: A single-walled carbon nanotube having an average diameter of 1.5 nm, a BET specific surface area of 1200 m²/g, and an I_{G}/I_{D} value of 70 or more was prepared.
2) Multi-walled carbon nanotube: A multi-walled carbon nanotube having an average diameter of 10 nm, and a BET specific surface area of 183 m²/g was prepared.
3) Carbon black: Carbon black having a BET specific surface area of 63.2 m²/g, and a primary particle size of 50 nm or less was prepared.
4) Ketjen black: Ketjen black having a BET specific surface area of 1270 m²/g, a pore volume of 495 cm³/100g, and a D50 of 12.5 mm was prepared.

### Example 1-1

1.0 g of the dispersant and 0.5 g of the single-walled carbon nanotube described above were mixed with 498.5 g of isopropyl alcohol. A pre-dispersion liquid was prepared by pre-dispersing the mixed solution by using a high-flow homogenizer, and 99.5 g of the positive electrode active material described above was added to the pre-dispersion liquid. Thereafter, a positive electrode active material composite was prepared by uniformly mixing the mixture with a rotating mixer, and then drying for 30 minutes at 130°C.

### Example 1-2

A positive electrode active material composite was prepared by performing Example 1-1 above in the same manner except that drying was performed for 30 minutes at 200°C.

### Example 1-3

A positive electrode active material composite was prepared by performing Example 1-1 above in the same manner except that 497 g of isopropyl alcohol, 2.0 g of the dispersant, and 1.0 g of the single-walled carbon nanotube described above were used such that a content of the carbon nanotube in the pre-dispersion liquid is 0.2 wt%, and 199 g of a positive electrode active material in the mixing was used.

### Comparative Example 1-1

A positive electrode active material composite was prepared by performing Example 1-1 above in the same manner except that 498.5 g of N-methyl-2-pyrrolidone was used instead of isopropyl alcohol as a solvent.

### Comparative Example 1-2

A positive electrode active material composite was prepared by performing Example 1-1 above in the same manner except that 498.5 g of N-methyl-2-pyrrolidone was used instead of isopropyl alcohol as a solvent, and drying was performed for 4 hours at 200°C.

### Comparative Example 1-3

A positive electrode active material composite was prepared by performing Example 1-1 above in the same manner except that 498.5 g of N-methyl-2-pyrrolidone was used instead of isopropyl alcohol as a solvent, and drying was performed for 24 hours at 200°C.

### Comparative Example 1-4

A positive electrode active material composite was prepared by performing Example 1-3 above in the same manner except that 83 g of water and 415.5 g of ethanol were used instead of isopropyl alcohol as solvents.

### Comparative Example 1-5

A positive electrode active material composite was prepared by performing Example 1-1 above in the same manner except that 83 g of water and 415.5 g of ethanol were used instead of isopropyl alcohol as solvents, and drying was performed for 24 hours.

### Comparative Example 1-6

A positive electrode active material composite was prepared by performing Example 1-1 above in the same manner except that drying was performed for 16 hours.

The content (wt%), the drying temperature (°C) and time (minutes) of each component in the pre-dispersion liquid in the preparation processes of Examples 1-1 to 1-3 and Comparative Examples 1-1 to 1-6 in which the positive electrode active material composite was prepared by using the single-walled carbon nanotube as the conductive material are summarized in Table 1 below.

**[Table 1]**

| | Exampl e 1-1 | Exampl e 1-2 | Exampl e 1-3 | Compar ative Exampl e 1-1 | Compar ative Exampl e 1-2 | Compar ative Exampl e 1-3 | Compar ative Exampl e 1-4 | Compar ative Exampl e 1-5 | Compar ative Exampl e 1-6 |
|---|---|---|---|---|---|---|---|---|---|
| SWCNT | 0.1 | 0.1 | 0.2 | 0.1 | 0.1 | 0.1 | 0.2 | 0.1 | 0.1 |
| Dispers ant | 0.2 | 0.2 | 0.4 | 0.2 | 0.2 | 0.2 | 0.4 | 0.2 | 0.2 |
| IPA | 99.7 | 99.7 | 99.7 | - | - | - | - | - | 99.7 |
| NMP | - | - | - | 99.7 | 99.7 | 99.7 | - | - | - |
| Water | - | - | - | - | - | - | 16.6 | 16.6 | - |
| Ethanol | - | - | - | - | - | - | 83.1 | 83.1 | - |
| Tempera ture | 130 | 200 | 130 | 130 | 200 | 200 | 130 | 130 | 130 |
| Time | 30 | 30 | 30 | 30 | 240 | 1440 | 30 | 1440 | 960 |

### Example 2-1

1.5 g of a dispersant and 5 g of the multi-walled carbon nanotube described above were mixed with 493.5 g of isopropyl alcohol. A pre-dispersion liquid was prepared by pre-dispersing the mixed solution by using a high-flow homogenizer, and 242.5 g of the positive electrode active material described above was added to the pre-dispersion liquid. Thereafter, a positive electrode active material composite was prepared by uniformly mixing the mixture with a rotating mixer, and then drying for 30 minutes at 130°C.

### Example 2-2

3 g of a dispersant and 10 g of the multi-walled carbon nanotube described above were mixed with 487 g of isopropyl alcohol. A pre-dispersion liquid was prepared by pre-dispersing the mixed solution by using a high-flow homogenizer, and 485 g of the positive electrode active material described above was added to the pre-dispersion liquid. Thereafter, a positive electrode active material composite was prepared by uniformly mixing the mixture with a rotating mixer, and then drying for 30 minutes at 130°C.

### Example 2-3

A positive electrode active material composite was prepared by performing Example 2-1 above in the same manner except that drying was performed for 30 minutes at 200°C.

### Comparative Example 2-1

A positive electrode active material composite was prepared by performing Example 2-1 above in the same manner except that N-methyl-2-pyrrolidone was used instead of isopropyl alcohol as a solvent.

### Comparative Example 2-2

A positive electrode active material composite was prepared by performing Example 2-1 above in the same manner except that N-methyl-2-pyrrolidone was used instead of isopropyl alcohol as a solvent, and drying was performed for 8 hours at 200°C.

### Comparative Example 2-3

A positive electrode active material composite was prepared by performing Example 2-1 above in the same manner except that N-methyl-2-pyrrolidone was used instead of isopropyl alcohol as a solvent, and drying was performed for 24 hours at 200°C.

### Comparative Example 2-4

A positive electrode active material composite was prepared by performing Example 2-1 above in the same manner except that 82.5 g of water and 411 g of ethanol were used.

### Comparative Example 2-5

A positive electrode active material composite was prepared by performing Example 2-1 above in the same manner except that drying was performed for 16 hours.

### Comparative Example 2-6

A positive electrode active material composite was prepared by performing Comparative Example 2-4 above in the same manner except that drying was performed for 24 hours.

The content (wt%), the drying temperature (°C) and time (minutes) of each component in the pre-dispersion liquid in the preparation processes of Examples 2-1 to 2-3 and Comparative Examples 2-1 to 2-6 in which the positive electrode active material composite was prepared by using the multi-walled carbon nanotube as the conductive material are summarized in Table 2 below.

**[Table 2]**

| | Exampl e 2-1 | Exampl e 2-2 | Exampl e 2-3 | Compar ative Exampl e 2-1 | Compar ative Exampl e 2-2 | Compar ative Exampl e 2-3 | Compar ative Exampl e 2-4 | Compar ative Exampl e 2-5 | Compar ative Exampl e 2-6 |
|---|---|---|---|---|---|---|---|---|---|
| MWCNT | 1 | 2 | 1 | 1 | 1 | 1 | 1 | 1 | 1 |
| Dispers ant | 0.3 | 0.6 | 0.3 | 0.3 | 0.3 | 0.3 | 0.3 | 0.3 | 0.3 |
| IPA | 98.7 | 97.4 | 98.7 | - | - | - | - | 98.7 | - |
| NMP | - | - | - | 98.7 | 98.7 | 98.7 | - | - | - |
| Water | - | - | - | - | - | - | 16.5 | - | 16.5 |
| Ethanol | - | - | - | - | - | - | 82.5 | - | 82.5 |
| Tempera ture | 130 | 130 | 200 | 130 | 200 | 200 | 130 | 130 | 130 |
| Time | 30 | 30 | 30 | 30 | 480 | 1440 | 30 | 960 | 1440 |

### Example 3-1

1.5 g of a dispersant and 5 g of the carbon black described above were mixed with 493.5 g of isopropyl alcohol. A pre-dispersion liquid was prepared by pre-dispersing the mixed solution by using a high-flow homogenizer, and 242.5 g of the positive electrode active material described above was added to the pre-dispersion liquid. Thereafter, a positive electrode active material composite was prepared by uniformly mixing the mixture with a rotating mixer, and then drying for 30 minutes at 130°C.

### Example 3-2

3 g of a dispersant and 10 g of the carbon black described above were mixed with 487 g of isopropyl alcohol. A pre-dispersion liquid was prepared by pre-dispersing the mixed solution by using a high-flow homogenizer, and 485 g of the positive electrode active material described above was added to the pre-dispersion liquid. Thereafter, a positive electrode active material composite was prepared by uniformly mixing the mixture with a rotating mixer, and then drying for 30 minutes at 130°C.

### Example 3-3

A positive electrode active material composite was prepared by performing Example 3-1 above in the same manner except that drying was performed for 30 minutes at 200°C.

### Comparative Example 3-1

A positive electrode active material composite was prepared by performing Example 3-1 above in the same manner except that N-methyl-2-pyrrolidone was used instead of isopropyl alcohol as a solvent.

### Comparative Example 3-2

A positive electrode active material composite was prepared by performing Example 3-1 above in the same manner except that N-methyl-2-pyrrolidone was used instead of isopropyl alcohol as a solvent, and drying was performed for 8 hours at 200°C.

### Comparative Example 3-3

A positive electrode active material composite was prepared by performing Example 3-1 above in the same manner except that N-methyl-2-pyrrolidone was used instead of isopropyl alcohol as a solvent, and drying was performed for 24 hours at 200°C.

### Comparative Example 3-4

A positive electrode active material composite was prepared by performing Example 3-1 above in the same manner except that 82.5 g of water and 411 g of ethanol were used.

### Comparative Example 3-5

A positive electrode active material composite was prepared by performing Example 3-1 above in the same manner except that drying was performed for 16 hours.

### Comparative Example 3-6

A positive electrode active material composite was prepared by performing Comparative Example 3-4 above in the same manner except that drying was performed for 24 hours.

The content (wt%) and the drying temperature (°C) and time (minutes) of each component in the pre-dispersion liquid in the preparation processes of Examples 3-1 to 3-3 and Comparative Examples 3-1 to 3-6 in which the positive electrode active material composite was prepared by using the carbon black as the conductive material are summarized in Table 3 below.

**[Table 3]**

| | Exampl e 3-1 | Exampl e 3-2 | Exampl e 3-3 | Compar ative Exampl e 3-1 | Compar ative Exampl e 3-2 | Compar ative Exampl e 3-3 | Compar ative Exampl e 3-4 | Compar ative Exampl e 3-5 | Compar ative Exampl e 3-6 |
|---|---|---|---|---|---|---|---|---|---|
| CB | 1 | 2 | 1 | 1 | 1 | 1 | 1 | 1 | 1 |
| Dispe rsant | 0.3 | 0.6 | 0.3 | 0.3 | 0.3 | 0.3 | 0.3 | 0.3 | 0.3 |
| IPA | 98.7 | 97.4 | 98.7 | - | - | - | - | 98.7 | - |
| NMP | - | - | - | 98.7 | 98.7 | 98.7 | - | - | - |
| Water | - | - | - | - | - | - | 16.5 | - | 16.5 |
| Ethan ol | - | - | - | - | - | - | 82.5 | - | 82.5 |
| Tempe ratur e | 130 | 130 | 200 | 130 | 200 | 200 | 130 | 130 | 130 |
| Time | 30 | 30 | 30 | 30 | 480 | 1440 | 30 | 960 | 1440 |

### Example 4-1

3 g of a dispersant and 10 g of the Ketjen black described above were mixed with 487g of isopropyl alcohol. A pre-dispersion liquid was prepared by pre-dispersing the mixed solution by using a high-flow homogenizer, and 485 g of the positive electrode active material was added to the pre-dispersion liquid. Thereafter, a positive electrode active material composite was prepared by uniformly mixing the mixture with a rotating mixer, and then drying for 30 minutes at 130°C.

### Example 4-2

A positive electrode active material composite was prepared by performing Example 4-1 above in the same manner except that drying was performed for 30 minutes at 200°C.

### Example 4-3

6 g of a dispersant and 20 g of the Ketjen black described above were mixed with 474 g of isopropyl alcohol. A pre-dispersion liquid was prepared by pre-dispersing the mixed solution by using a high-flow homogenizer, and 970 g of the positive electrode active material described above was added to the pre-dispersion liquid. Thereafter, a positive electrode active material composite was prepared by uniformly mixing the mixture with a rotating mixer, and then drying for 30 minutes at 130°C.

### Comparative Example 4-1

A positive electrode active material composite was prepared by performing Example 4-1 above in the same manner except that N-methyl-2-pyrrolidone was used instead of isopropyl alcohol as a solvent.

### Comparative Example 4-2

A positive electrode active material composite was prepared by performing Example 4-1 above in the same manner except that N-methyl-2-pyrrolidone was used instead of isopropyl alcohol as a solvent, and drying was performed for 8 hours at 200°C.

### Comparative Example 4-3

A positive electrode active material composite was prepared by performing Example 4-1 above in the same manner except that N-methyl-2-pyrrolidone was used instead of isopropyl alcohol as a solvent, and drying was performed for 24 hours at 200°C.

### Comparative Example 4-4

A positive electrode active material composite was prepared by performing Example 4-1 above in the same manner except that 81 g of water and 406 g of ethanol were used.

### Comparative Example 4-5

A positive electrode active material composite was prepared by performing Example 4-1 above in the same manner except that drying was performed for 16 hours.

### Comparative Example 4-6

A positive electrode active material composite was prepared by performing Comparative Example 4-4 above in the same manner except that drying was performed for 24 hours.

The content (wt%), the drying temperature (°C) and time (minutes) of each component in the pre-dispersion liquid in the preparation processes of Examples 4-1 to 4-3 and Comparative Examples 4-1 to 4-6 in which the positive electrode active material composite was prepared by using the Ketjen black as the conductive material are summarized in Table 4 below.

**[Table 4]**

| | Exampl e 4-1 | Exampl e 4-2 | Exampl e 4-3 | Compar ative Exampl e 4-1 | Compar ative Exampl e 4-2 | Compar ative Exampl e 4-3 | Compar ative Exampl e 4-4 | Compar ative Exampl e 4-5 | Compar ative Exampl e 4-6 |
|---|---|---|---|---|---|---|---|---|---|
| KB | 2 | 2 | 4 | 2 | 2 | 2 | 2 | 2 | 2 |
| Dispers ant | 0.6 | 0.6 | 1.2 | 0.6 | 0.6 | 0.6 | 0.6 | 0.6 | 0.6 |
| IPA | 97.4 | 97.4 | 94.8 | - | - | - | - | 97.4 | - |
| NMP | - | - | - | 97.4 | 97.4 | 97.4 | - | - | - |
| Water | - | - | - | - | - | - | 16.2 | - | 16.2 |
| Ethanol | - | - | - | - | - | - | 81.2 | - | 81.2 |
| Tempera ture | 130 | 200 | 130 | 130 | 200 | 200 | 130 | 130 | 130 |
| Time | 30 | 30 | 30 | 30 | 480 | 1440 | 30 | 960 | 1440 |

### Experimental Example 1. Measurement of Residual Solvent Content in Positive Electrode Active Material Composite

2 g of each of the positive electrode active material composites prepared in Examples and Comparative Examples was pre-treated by heating for 15 minutes at 200°C. The pretreated sample was put into a heating moisture meter (AMD, MX-50) to measure the residual solvent content (wt%) in the sample. The results are summarized in Table 5 below.

**[Table 5]**

| | | | | | | | | | |
|---|---|---|---|---|---|---|---|---|---|
| Residual solvent content | Exampl e 1-1 | Exampl e 1-2 | Exampl e 1-3 | Compar ative Exampl e 1-1 | Compar ative Exampl e 1-2 | Compar ative Exampl e 1-3 | Compar ative Exampl e 1-4 | Compar ative Exampl e 1-5 | Compar ative Exampl e 1-6 |
| | 0.28 | 0.21 | 0.29 | Unable to measur e | 4.80 | 3.10 | 1.12 | 0.05 | 0.09 |
| | Exampl e 2-1 | Exampl e 2-2 | Exampl e 2-3 | Compar ative Exampl e 2-1 | Compar ative Exampl e 2-2 | Compar ative Exampl e 2-3 | Compar ative Exampl e 2-4 | Compar ative Exampl e 2-5 | Compar ative Exampl e 2-6 |
| | 0.31 | Measur ement omissi on | 0.19 | Unable to measur e | 5.70 | 4.10 | 1.22 | 0.02 | 0.00 |
| | Exampl e 3-1 | Exampl e 3-2 | Exampl e 3-3 | Compar ative Exampl e 3-1 | Compar ative Exampl e 3-2 | Compar ative Exampl e 3-3 | Compar ative Exampl e 3-4 | Compar ative Exampl e 3-5 | Compar ative Exampl e 3-6 |
| | 0.45 | Measur ement omissi on | 0.30 | Unable to measur e | 6.20 | 5.90 | 1.54 | 0.03 | 0.03 |
| | Exampl e 4-1 | Exampl e 4-2 | Exampl e 4-3 | Compar ative Exampl e 4-1 | Compar ative Exampl e 4-2 | Compar ative Exampl e 4-3 | Compar ative Exampl e 4-4 | Compar ative Exampl e 4-5 | Compar ative Exampl e 4-6 |
| | 0.37 | 0.31 | Measur ement omissi on | Unable to measur e | 6.40 | 4.30 | 1.37 | 0.07 | 0.17 |

It may be seen that as confirmed in Table 5 above, when Comparative Examples 1-1 to 1-3, Comparative Examples 2-1 to 2-3, Comparative Examples 3-1 to 3-3, and Comparative Examples 4-1 to 4-3 using NMP typically frequently used as a solvent are dried under the same condition as Examples according to the present invention, the residual solvent content is too high to be measured, and even when dried at a much higher temperature and during a much longer time than Examples according to the present invention, the residual solvent content exceeds 2 wt%.

In addition, it is confirmed that when Comparative Examples 1-4 to 1-5, Comparative Examples 2-4 to 2-5, Comparative Examples 3-4 to 3-5, and Comparative Examples 4-4 to 4-5 using a mixture of water and ethanol as the solvents are dried under the same condition as Examples according to the present invention, the residual solvent content exceeds 1 wt%, and when the drying time becomes very long, the residual solvent content decreases to less than 0.2 wt%. In addition, it is confirmed that the residual solvent contents of Comparative Examples 1-6, 2-6, 3-6, and 4-6 using isopropyl alcohol as the solvent, and having very long drying time like Examples according to the present invention decrease to less than 0.2 wt%.

Meanwhile, it is expected that the residual solvent contents of Examples 2-2, 3-2, and 4-3, among Examples, in which the pre-dispersion liquid having a higher concentration is used is not separately measured, but the residual solvent contents of Examples 2-3, 3-2, and 4-3 may be similar to Examples 2-1, 3-1, and 4-1 respectively in consideration of a point that the residual solvent content of Example 1-3 is similar to that of Example 1-1.

Meanwhile, it is confirmed that since in a case of Comparative Example 1, NMP is used as the solvent, and the drying time is short, the residual solvent content is too excessive to be measured.

### Experimental Example 2. Confirmation of Electrical Conductivity of Positive Electrode Active Material Composite

A flake-shaped sample for measuring electrical conductivity was manufactured by mixing the positive electrode active material composite prepared in Examples above and Comparative Examples above and polytetrafluoroethylene (PTFE), which is the binder, in a weight ratio of 99:1, then kneading for 90 seconds with a bench kneader, and then grinding for 10 seconds. All samples were manufactured to have thicknesses of 2.8 mm.

A sheet resistance and conductivity were measured for the manufactured samples, and each of the characteristics was measured in the following methods.
1) The sheet resistance (Ω/sq): measured by using a resistance measurement equipment (HPRM-FA2, Hantech Co., Ltd). Specifically, the resistance was measured by loading the flake-shaped sample into the resistance measurement equipment, and then applying a weight up to 2 tons to minimize voids.
2) The conductivity (S/cm): automatically calculated in the resistance measurement equipment by using a resistance value and a sample thickness value measured in the resistance measurement equipment.

The measurement results are summarized in Tables 6 to 9 below.

**[Table 6]**

| | Exampl e 1-1 | Exampl e 1-2 | Exampl e 1-3 | Compar ative Exampl e 1-1 | Compar ative Exampl e 1-2 | Compar ative Exampl e 1-3 | Compar ative Exampl e 1-4 | Compar ative Exampl e 1-5 | Compar ative Exampl e 1-6 |
|---|---|---|---|---|---|---|---|---|---|
| Residua 1 solvent content | 0.28 | 0.21 | 0.29 | Unable to measur e | 4.80 | 3.10 | 1.12 | 0.05 | 0.09 |
| Sheet resista nce | 28.0 | 32.2 | 26.5 | | 304.0 | 171.3 | 45.1 | 47.9 | 42.7 |
| Conduct ivity | 0.122 | 0.111 | 0.132 | | 0.012 | 0.021 | 0.079 | 0.075 | 0.084 |

**[Table 7]**

| | Exampl e 2-1 | Exampl e 2-2 | Exampl e 2-3 | Compar ative Exampl e 2-1 | Compar ative Exampl e 2-2 | Compar ative Exampl e 2-3 | Compar ative Exampl e 2-4 | Compar ative Exampl e 2-5 | Compar ative Exampl e 2-6 |
|---|---|---|---|---|---|---|---|---|---|
| Residua 1 solvent content | 0.31 | Measur ement omissi on | 0.19 | Unable to measur e | 5.70 | 4.10 | 1.22 | 0.02 | 0.00 |
| Sheet resista nce | 35.0 | 32.0 | Measur ement omissi on | | Measur ement omissi on | Measur ement omissi on | 54.2 | 44.3 | 48.1 |
| Conduct ivity | 0.115 | 0.122 | | | | | 0.066 | 0.081 | 0.074 |

**[Table 8]**

| | Exampl e 3-1 | Exampl e 3-2 | Exampl e 3-3 | Compar ative Exampl e 3-1 | Compar ative Exampl e 3-2 | Compar ative Exampl e 3-3 | Compar ative Exampl e 3-4 | Compar ative Exampl e 3-5 | Compar ative Exampl e 3-6 |
|---|---|---|---|---|---|---|---|---|---|
| Residua 1 solvent content | 0.45 | Measur ement omissi on | 0.30 | Unable to measur e | 6.20 | 5.90 | 1.54 | 0.03 | 0.03 |
| Sheet resista nce | 39.0 | 36.7 | Measur ement omissi on | | Measur ement omissi on | Measur ement omissi on | 67.5 | 47.7 | 50.0 |
| Conduct ivity | 0.100 | 0.109 | | | | | 0.053 | 0.075 | 0.071 |

**[Table 9]**

| | Example 4-1 | Example 4-2 | Example 4-3 | Comparative Example 4-1 | Comparative Example 4-2 | Comparative Example 4-3 | Comparative Example 4-4 | Comparative Example 4-5 | Comparative Example 4-6 |
|---|---|---|---|---|---|---|---|---|---|
| Residual solvent content | 0.37 | 0.31 | Measurement omission | Unable to measure | 6.40 | 4.30 | 1.37 | 0.07 | 0.17 |
| Sheet resistance | 37.2 | Measurement omission | 36.7 | | Measur ement omission | Measur ement omission | 61.9 | 46.8 | 49.7 |
| Conductivity | 0.100 | | 0.109 | | | | 0.058 | 0.076 | 0.072 |

It may be confirmed that as summarized in Tables 6 to 9 above, the samples manufactured by mixing the binder and the positive electrode active material composite according to the present invention have remarkably lower sheet resistances and more excellent electrical characteristics due to high conductivity than the samples manufactured by using the positive electrode active material composite having the residual solvent content less than 0.18 wt% or more than 1.0 wt%. Meanwhile, in the cases of Comparative Examples 1-1, 2-1, 3-1, and 4-1, the binders are not smoothly microfiberized due to the excessive residual solvent contents in the positive electrode active material composites, and thus the samples are not easily manufactured.

In particular, the result that Comparative Examples having higher residual solvent contents of the positive electrode active material composites than Examples exhibit much worse sheet resistance and conductivity than Examples is understood to be due to the point that the excessive residual solvent remaining in the composite acts as impurities to degrade the electrical characteristics of the active material composite. Meanwhile, the result that Comparative Examples having the too small residual solvent content exhibit worse electrical characteristics than Examples is understood to be due to the point that a composite durability degradation phenomenon occurs in the process of removing the excessive residual solvent during drying.

From the above results, it is confirmed that the positive electrode active material composite having an optimized residual solvent content may be manufactured by appropriately controlling the solvent used in the process of applying the conductive material on the surface of the positive electrode active material, and a temperature and time in the drying process, and in particular, the positive electrode active material composite with which a dry electrode is easily manufactured, and which has excellent electrical characteristics may be manufactured by appropriately controlling the residual solvent content in the positive electrode active material composite.

## Claims

1. A positive electrode active material composite comprising:
a positive electrode active material; and
a coating layer formed on a surface of the positive electrode active material,
wherein the coating layer includes a conductive material, and
a residual solvent content is 0.18 to 1.0 wt%.

2. The positive electrode active material composite of claim 1, wherein the residual solvent content is 0.2 to 0.5 wt%.

3. The positive electrode active material composite of claim 1, wherein the positive electrode active material is at least one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-y}Co_{y}O₂(0<y<1), LiCo_{1-y}Mn_{y}O₂(0<y<1), LiNi_{1-y}Mn_{y}O₂(0≤y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2), LiCoPO₄ and LiFePO₄.

4. The positive electrode active material composite of claim 1, wherein the conductive material is at least one selected from the group consisting of a single-walled carbon nanotube, a multi-walled carbon nanotube, carbon black, and Ketjen black.

5. The positive electrode active material composite of claim 4, wherein the single-walled carbon nanotube has an average diameter of 0.5 to 2 nm.

6. The positive electrode active material composite of claim 4, wherein the multi-walled carbon nanotube has an average diameter of 100 nm or less.

7. The positive electrode active material composite of claim 4, wherein the carbon black has a D50 of 1 to 50 µm.

8. The positive electrode active material composite of claim 4, wherein the Ketjen black has a pore volume of 200 to 600 cm³/100g.

9. The positive electrode active material composite of claim 1, wherein the conductive material has a content of 0.01 to 10 wt% with respect to the total weight of the positive electrode active material composite.

10. The positive electrode active material composite of claim 1, wherein the residual solvent is at least one selected from the group consisting of an amide-based polar organic solvent, an alcohol-based solvent, a glycol-based solvent, a glycol ether-based solvent, a ketone-based solvent, and an ester-based solvent, and
the residual solvent has a boiling point of 120°C or less.

11. A method for preparing a positive electrode active material composite, the method comprising:
a step (S1) of preparing a pre-dispersion liquid by mixing a conductive material, a dispersant, and a solvent;
a step (S2) of preparing a positive electrode active material mixture by mixing the pre-dispersion liquid and a positive electrode active material; and
a step (S3) of preparing the positive electrode active material composite by drying the positive electrode active material mixture,
wherein the solvent is at least one selected from the group consisting of an amide-based polar organic solvent, an alcohol-based solvent, a glycol-based solvent, a glycol ether-based solvent, a ketone-based solvent, and an ester-based solvent, and
the solvent has a boiling point of 120°C or less.

12. The method of claim 11, wherein the step S3 is performed at a temperature condition of 60 to 200°C.

13. The method of claim 11, wherein the step S3 is performed for 0.5 to 8 hours.

14. The method of claim 11, wherein the pre-dispersion liquid prepared in the step S1 has an initial viscosity of 40000 cP or less.
